# EUROPEAN PATENT SPECIFICATION

(11) **EP 2 941 337 B1**
(45) Date of publication and mention of the grant of the patent: **28.11.2018**
(21) Application number: 13828952.5
(22) Date of filing: 11.12.2013
(51) Int. Cl.: B29B 17/00, B29B 17/04, B02C 13/04, B02C 13/28, B02C 13/284

(54) **METHOD AND MACHINE FOR PRODUCING TUFT MATTER AS CONSTRUCTION MATERIAL**
VERFAHREN UND MASCHINE ZUR HERSTELLUNG VON FLOCKMATERIAL ALS BAUMATERIAL
PROCÉDÉ ET MACHINE DE FABRICATION D'UN MATÉRIAU EN TOUFFES CONSTITUANT UND MATÉRIAU DE CONSTRUCTION

(30) Priority: 14.12.2012 SK 500572012
(43) Date of publication of application: 11.11.2015
(73) Proprietor: PR Krajné, s.r.o., 916 16 Krajné (SK)
(72) Inventor: PLESNÍK, Juraj, 907 01 Myjava (SK); ZLÁMALA, Jozef, 841 02 Bratislava (SK)
(74) Representative: Belescak, Ladislav
(86) International application number: PCT/SK2013/050014
(87) International publication number: WO 2014/092659

(56) References cited:
- EP-A1- 0 728 565
- DE-A1- 3 343 788
- DE-A1-102010 008 349
- DE-A1-102011 050 789
- ANONYMOUS: "Separation process", RESEARCH DISCLOSURE, MASON PUBLICATIONS, HAMPSHIRE, GB, vol. 388, no. 13, 1 August 1996 (1996-08-01), XP007121205, ISSN: 0374-4353

## Description

### Technical Field

The present invention relates to the manner of producing and the machine for producing of the tuft matter composed mainly of non-textile particles and fibres, serving in particular as construction material for building industry, and the manner of producing and the machine for producing tufts as basic component of tuft matter.

### Background Art

Construction materials known till now, composed of textile fibres and used in particular in the building industry, can be divided into two groups. First, there are materials with the nature of cotton wool and composed solely of fibres, either textile, paper or glass one. Textile and paper fibres are produced in particular by cotton technology, when basic fibre raw material is loosened, ruffled up and then fiberized with the aim of obtaining as long fibres as possible, which are processed to yarn and fleece. Carding machines of various designs are used for fiberizing. Also technologic and collected textile waste of products, in particular from classic woven and non-woven textiles or from paper by recycling process, are used for producing such materials, while the set of carding machines installed one after another is used for sufficient fiberizing. Disadvantages of these materials include that their properties are given mostly by properties of basic material and for instance in the building industry, it is necessary to use them in combination with other materials for achieving better parameters of in particular thermal and sound insulation and fire resistance.

Another group of known materials includes materials with the nature of mixtures composed of powders, sands, granules or crushed material with admixture of various fibres, in particular from textiles and glass. These fibres are manufactures by separate process and admixed stuff gives better properties to the material. Also in this case, textile recycled materials are used for manufacturing of textile component, similarly as in the case of above described group of materials. Disadvantages of this group of materials are similar.

Another process known in the art is EP 0728565 A1, describing the Carpet recycling process and system. Within the description, also the conventional hammermill (106) is included in the production process. It has a center-feed housing containing a rotor comprised of concentrically stacked flywheel discs. A series of elongate hammer bars are coupled to the rotor via hammer pins extending parallel to the rotational center axis of the rotor but disposed in circumferentially spaced relationship about the flywheel discs. An apertured curved anvil plate -- e.g., a screen, sieve bar plate or the like -- is positioned below but spaced from the rotor. Upon rotation of the rotor, therefore, the elongate hammer bars will independently rotate about their respective hammer pins during a downward travel segment so as to impact the carpet strips against the curved screen. The disadvantage of this equipment is the incomplete shredding of the carpet structure. It only segregates the backing material, which forms heterogeneous mixture of tufts, which has to be processed further, e.g., by tearing up and entangling on another devices. Such heterogeneous mixture of carpet tufts and backing material is not suitable for structural materials mainly in building industry.

Another process known in the art is DE 3343788 A1 which describes the Process and equipment for separation of fibrous materials from non-fibrous materials. Under this process, the products or material mixtures are shredded with rotating drivers, when the fibrous materials released thereby are exhausted through sieves. This procedure deals with another problem: separation of fibrous materials from non-fibrous materials. The described equipment includes a rotating drum with external surface of constant diameter between the box input and output holes, with knife blades of identical shape and configuration density. This does not allow, for instance, the tearup of either hardened textile fabric or combined textile/non-textile material.

Another process known in the art is DE 102011050789 A1, which describes the equipment for mechanical separation of material conglomerates, equipment for removal of slag and ash, belonging to another industry. The equipment consists of cylindrical box with input and output holes for the processed material. The outer surface of the rotating drum is shaped in bevelled conus with diameter increasing from the box input to output hole. It is equipped with a set of hammer knives with blades placed on central clamps. The knives configuration throughout the outer surface perimeter is uniform. The box inner surface, like the rotating cylinder, is made in shape of bevelled conus with square nibs, also uniformly distributed. Such equipment has no pikes with gradually shrinking shape and their configuration density does not increase gradually. Also the square nibs of the box inner surface are of constant shape and configuration density. This does not make possible both gradual shredding inside the equipment and tearup of fragments of hardened textile and combined textile/non-textile materials.

Another process known in the art is DE 10201008349 A1, which describes the process of pellets production of fibrous composite materials containing carbon fibers and at least one thermoplastic matrix material. This process belongs to another industry. The process under the invention makes possible the carbon fibers segregation from wastes or old pieces, their further placement together with the thermoplastic matrix material and, using the heat, their compression to board-shaped pieces. Afterwards, this material is dried and crushed to pellets, small boards or chips. This procedure is using different equipment design, which does not make possible gradual shredding and tearup of fragments of hardened textile and combined textile/non-textile materials.

### Disclosure of Invention

Hereinabove mentioned shortcomings are eliminated to the substantial degree by the manner of producing and the machine for producing tuft matter according to this technical design, as defined in claims 1 and 3.

The substance of the manner of producing mentioned tuft matter, where worn-out and/or residue parts of products used in means of transportation are the feedstock material, resides in that the feedstock material, composed of hardened textiles and combined textile and non-textile components, is first processed by chopping in a chopping machine to defined maximum size of chips. Then chips are ripped up, crushed, decomposed and fiberized by means of tufting machine to tufts. These tufts are composed of feedstock material particles wrapped with clumps of fiberized fibres. Tufts are then mechanically processed to cohesive mixture of components with spatial structure approximating even distribution of its components.

Processing of tufts is realized by decomposing to defined maximum size by means of a cutting machine. Further, processing is done by loosening, mixing and interlacing by means of a carding machine. Advantageously additional material of particles and/or textile fibres is added to tufts before processing thereof.

The manner of producing tuft matter uses a tuft-making machine for production of tufts, comprising of the box with inlet opening and outlet opening for processed material, wherein rotating drum provided with tools on the surface is placed in this box on the shaft, the substance whereof resides in that rotating drum has outer surface made in the shape of truncated cone with increasing diameter in the direction from the inlet opening to the outlet opening of the box. Surface of the drum is equipped with the set of swing-hammer cutters with blades placed on pivot pins. Cutters are arranged on the circumference of the outer surface evenly in the shape of defined geometric figure. In the direction from the inlet opening to the outlet opening of the box, cutters have spikes with gradually smaller shape and rate and density of their arrangement gradually increases. The box of the machine has inner surface, identically as its rotating drum, made in the shape of truncated cone with mirror reflection of the outer surface of the drum. Angular protrusions, having gradually smaller shape and gradually increasing rate and density of their arrangement in the direction from the inlet opening to the outlet opening of the box, are provided on the inner surface. Geometric figure of protrusions arrangement is mirror reflection of corresponding figure of the outer surface of the drum. Gap for movement of processed material is provided between protrusions and cutters of the drum.

Rotating drum of the machine is firmly placed on bearing shaft and by means thereof, it is adjustably placed in the horizontal direction towards the box for the purpose of adjusting gap size.

Cutters and corresponding protrusions of the machine are advantageously arranged into several sections, where each section comprises of the set of at least two cutters with the same shape of spikes and at least two corresponding protrusions of the same shape.

Outer surface of the drum and corresponding inner surface of the box are advantageously divided into at least two sections with spikes with different shape decreasing from the first section, as well as corresponding different protrusions gradually decreasing from the first section.

Circumferential circle is defined geometric figure of cutters and corresponding protrusions arrangement in the machine.

Design of the cutter is advantageously such that there is at least one gap provided between spikes.

### Brief Description of Drawings

The design is further elucidated on enclosed drawings, where:
Fig. 1 - illustrates the structure of tuft and illustrative scheme of tuft matter production procedure;
Fig. 2 - illustrates side view to the tuft-making machine with uncovered part of the box;
Fig. 3 - illustrates side view to the tuft-making machine with the section of upper part into inner working space;
Fig. 4 - illustrates view to inner three-section arrangement of the working space of the tuft-making machine;
Fig. 5 - illustrates design of the cutter with pivotable arrangement of the blade and gap provided between the set of spikes.

### Mode(s) for Carrying Out the Invention

### Example 1

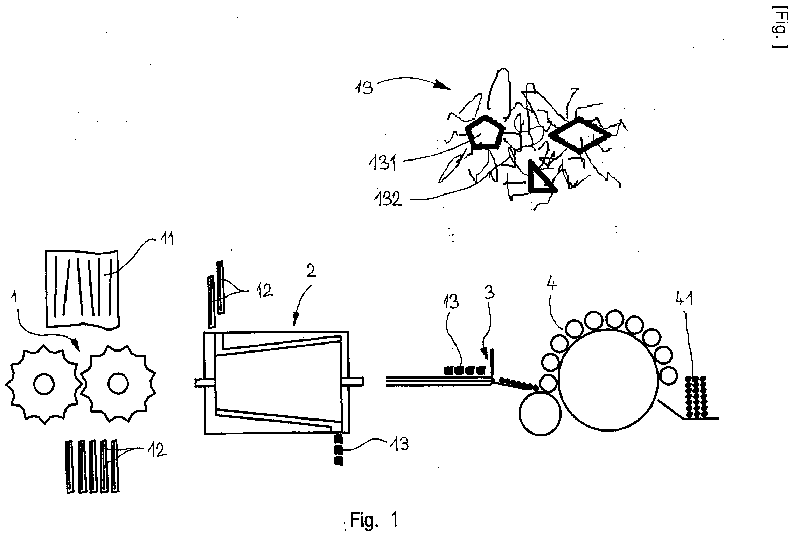

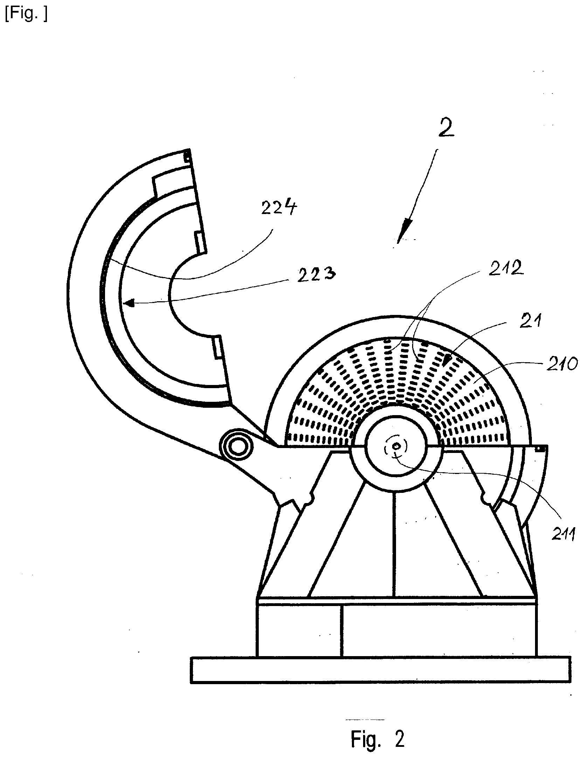

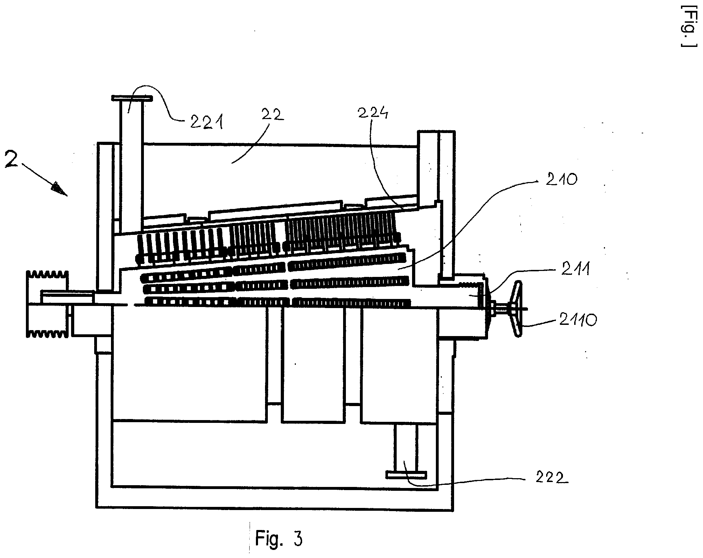

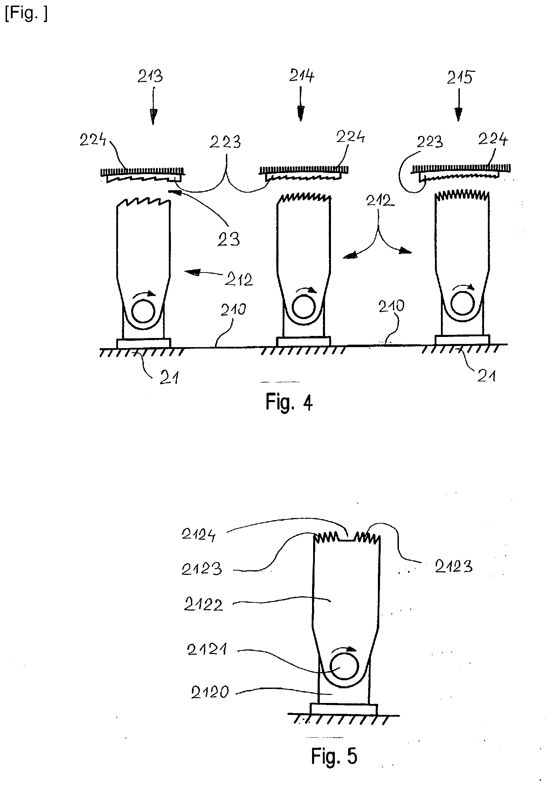

Tuft matter 41 (Figure 1), as construction material for building industry, comprises of the set of tufts 13, consisting of particles 131 from non-textile shreds and/or fragments of hardened textile mutually interlaced with fiberized textile fibres 132.
Chips of sound insulation covering of combined textile and non-textile material from the production of upholstery for means of transportation and worn-out hardened textiles of carcarpets of passenger vehicles are the feedstock material 11 for production of tuft matter 41. The feedstock material 11 is chopped in the chopping machine 1 to chips 12 with the maximum size of 20cm. Chips 12 are fed to the tuft-making machine 2.
The tuft-making machine 2 (Figures 2 and 3) comprises of the box 22 with the inlet opening 221 for feeding chips 12 and the outlet opening 222 for discharging tufts 13.
Rotating drum 21 with the outer surface 210 with the shape of truncated cone is provided in the box 22 on the shaft 211. Truncated cone is made with increasing diameter in the direction from the inlet opening 221 to the outlet opening 222. Outer surface 210 (Figure 4) is provided on the brackets 2120 with the set of swing-hammer cutters 212 with blades 2122 placed on pivot pins 2121. Cutters 212 are arranged on the circumference of the outer surface 210 evenly in curves of circumferential circles situated side-by-side. In the direction from the inlet opening 221 to the outlet opening 222, cutters 212 have spikes 2123 with gradually smaller shape and rate and density of their arrangement gradually increases.
The box 22 has inner surface 224 made also in the shape of truncated cone with mirror reflection of the outer surface 210 of the drum 21. Angular protrusions 223, having gradually smaller shape and gradually increasing rate and density of their arrangement in the direction from the inlet opening 221 to the outlet opening 222, are provided on the inner surface 224. Geometrical figure of arrangement of protrusions 223 of the box 22 is mirror reflection of corresponding figure of arrangement of cutters 212 on the outer surface 210 of the drum 21, i.e. circumferential circles situated side-by-side. Gap 23 for movement of processed material is provided between protrusions 223 and cutters 212.

Rotating drum 21 (Figure 3) is firmly placed on the bearing shaft 211 and by means thereof, it is adjustably placed in the horizontal direction towards the box 22 for the purpose of adjusting gap 23 size by means of shifter 2110.

Chips 12 fed to the tuft-making machine 2 is ripped up, crushed and fiberized to tufts 13. First component of the tuft 13 consists of particles 131 of solid residues of feedstock material 11 disintegrated to various sizes and various shapes. Second component consists of fibres 132 of fiberized fabric of feedstock material 11 with the maximum length of 20 cm, which are variously interlaced among particles 131, while a clump of such tufts 13 forms cohesive formation of tuft-matter 41.

### Example 2

Example 2 contains all components of the tuft-making machine 2 and their mutual interconnections, as well as the production procedure described in the example 1 with such difference that outer surface 210 of the drum 21 and corresponding inner surface 224 of the box 22 are divided into three sections, namely first section 213, second section 214 and third section 215. First section 213 consists of the set of cutters 212 with the same shape of spikes 2123 and the set of corresponding protrusions 223 of the same shape. Second section 214 consist of the set of cutters 212 with the same shape of spikes 2123, which is however, smaller than in the first section 213 and the set of corresponding protrusions 223 of the same shape, which is however, smaller than in the first section 213. Third section 215 consist of the set of cutters 212 with the same shape of spikes 2123, which is however, smaller than in the second section 214 and the set of corresponding protrusions 223 of the same shape, which is however, smaller than in the second section 214. In the production process, tufts 13 are also processed by cutting on the cutting machine 3 to the maximum size up to 25 mm and loosen, mix and interlace by carding in the carding machine 4 to cohesive formation of tuft matter 41.

### Example 3

Example 3 contains all components of the tuft-making machine 2 and their mutual interconnections, as well as the production procedure described in the example 1 or the example 2 with such difference that the third section 215 of the tuft-making machine 2 is provided with cutters 212 (Figure 5) having one gap 2124 provided in the middle among spikes 2123. In the production process, additional material from crushed textile car tyre cords is also admixed to tufts 13 before processing thereof.

Described examples are not the only one, but only characteristic examples, while composition and structure of the feedstock material 11, design options and settings of tuft-making machine 2 parameters allow various variability of the process with achieving aimed parameters of sizes, quantities and arrangement of components of resulting tuft matter 41 material.

## Claims

1. The manner of producing tuft matter, as construction material, in particular for building industry, where worn-out and/or residue parts of products used in means of transportation are the feedstock material (11), wherein the feedstock material (11), containing hardened textiles and combined textile and non-textile components is first chopped to chips (12) of defined maximum size of chips by means of a chopping machine (1), then it is crushed, decomposed and fiberized to tufts (13) by means of a tufting machine (2) where a rotating drum (21) has an outer surface (210) made in the shape of a truncated cone with increasing diameter in the direction from an inlet opening (221) to an outlet opening (222) of a box (22) and the outer surface (210) is provided with a set of swing-hammer cutters (212), which are provided with a blades (2122) placed on a pivot pins (2121), the cutters (212) are arranged on a circumference of the outer surface (210) evenly in a shape of defined geometric figure, while in the direction from the inlet opening (221) to the outlet opening (222) of the box (22), the cutters (212) have a spikes (2123) with gradually smaller shape and rate and density of their arrangement gradually increases, the box (22) has an inner surface (224), identically as the rotating drum (21), made in the shape of the truncated cone with a mirror reflection of the outer surface (210) of the drum (21) and an angular protrusions (223) are provided thereon, wherein the geometric figure of the protrusions (223) arrangement is the mirror reflection of corresponding figure of the outer surface (210) of the drum (21), and these tufts (13), containing particles (131) of the feedstock material (11) wrapped with clumps of fiberized fibres (132) are subsequently mechanically processed to cohesive formation of components with spatial structure approximating even arrangement of its components by division to defined maximum size by means of a cutting machine (3) and subsequently loosened, mixed and interlaced by means of a carding machine (4).

2. The manner of producing tuft matter according to the claim 1, **characterized in that** additional material of particles and/or textile fibres is admixed to tufts (13) before processing thereof.

3. The tuft-making machine (2) for producing tuft matter as construction material, in particular for building industry, produced by the manner described in the claims 1 to 2, comprising of a box (22) with an inlet opening (221) and an outlet opening (222) for processed material, wherein a rotating drum (21) provided with tools on the surface is placed on a shaft (211), wherein the rotating drum (21) has a outer surface (210) made in the shape of a truncated cone with increasing diameter in the direction from the inlet opening (221) to the outlet opening (222) of the box (22) and provided with a set of swing-hammer cutters (212) with a blades (2122) placed on a pivot pins (2121) arranged on a circumference of the outer surface (210) evenly in a shape of defined geometric figure, while in the direction from the inlet opening (221) to the outlet opening (222) of the box (22), the cutters (212) have a spikes (2123) with gradually smaller shape and rate and density of their arrangement gradually increases, the box (22) has an inner surface (224), identically as the rotating drum (21), made in the shape of truncated cone with a mirror reflection of the outer surface (210) of the drum (21) and an angular protrusions (223), having gradually smaller shape and gradually increasing rate and density of their arrangement in the direction from the inlet opening (221) to the outlet opening (222) of the box (22), are provided thereon, wherein the geometric figure of the protrusions (223) arrangement is the mirror reflection of corresponding figure of the outer surface (210) of the drum (21), while a gap (23) for movement of processed material is provided between the protrusions (223) and the cutters (212) of the drum (21).

4. The machine according to the claim 3, **characterized in that** the rotating drum (21) is firmly placed on a bearing shaft (211) and by means thereof, it is adjustably placed in the horizontal direction towards the box (22) for the purpose of adjusting the gap (23) size.

5. The machine according to the claims 3 to 4, **characterized in that** the cutters (212) and corresponding protrusions (223) are arranged into several sections (213, 214, 215), where each section comprises of the set of at least two cutters (212) with the same shape of the spikes (2123) and at least two corresponding protrusions (223) of the same shape.

6. The machine according to the claims 3 to 5, **characterized in that** the outer surface (210) of the drum (21) and corresponding inner surface (224) of the box (22) are divided into at least two sections (213, 214) with the spikes (2123) with different shape decreasing from the first section (213), and corresponding different protrusions (223) with the shape gradually decreasing from the first section (213).

7. The machine according to any of the claims 3 to 6, **characterized in that** the circumferential circle is defined the geometric figure of the cutters (212) and the corresponding protrusions (223) arrangement.

8. The machine according to any of the claims 3 to 7, **characterized in that** the cutter (212) has at least one gap (2124) provided among the spikes (2123).

## Patentansprüche

1. Das Verfahren zur Herstellung vom Bauschstoff als Konstruktionsmaterial, vor allem für Bauwesen, wo als das Inputmaterial (11) abgenutzte und/oder Restteile von Produkten eingesetzt werden, die in den Verkehrsmitteln verwendet werden, in dem das Inputmaterial (11), das die Harttextilien und kombinierten Bestandteile aus Textilnichttextilen Stoffen sind, zuerst in Schnittgut (12) mit definierten Maximalmaßen mithilfe einer Schneidmaschine (1) geschnitten, anschließend mithilfe einer Bauschanlage (2) in Bauschbüschel (13) zerkleinert, separiert und zerfasert wird, wo die Außenfläche (210) der Drehtrommel (21) in Form vom abgestumpften Kegel, mit sich erweiterndem Durschnitt in Richtung von der Eingangsöffnung (221) zur Ausgangsöffnung (222) des Kastens (22) hergestellt wurde, und die Außenfläche (210) mit einem System aus Hammermessern (212), welche mit Klingen (2122) in Drehbolzen (2121) gelagert versehen sind, ausgestattet ist, die Messer (212) sind im Umfang der Außenfläche (210) gleichmäßig in einer geometrischen Form angeordnet, wobei in Richtung von der Eingangsöffnung (221) zur Ausgangsöffnung (222) des Kastens (22) die Messer (212) eine sich allmählich verkleinernde Formausgestaltung der Spitzen (2123) und eine allmählich sich erhöhende Anzahl und Dichte deren Anordnung aufweisen, der Kasten (22) hat eine Innenfläche (224), gleich wie die Drehtrommel (21), hergestellt in Form eines abgestumpften Kegels als Spiegelbild der Außenfläche (210) der Trommel (21) und auf seiner Oberfläche sind kantige Vorsprünge (223) angeordnet, wo die geometrische Form der Anordnung der Vorsprünge (223) ein Spiegelbild der entsprechenden Form der Außenfläche (210) der Trommel (21) ist, und diese Bauschstoffe (13), die die Partikel (131) des Inputmaterials (11) beinhalten, umhüllt mit einem Klumpen der zerfaserten Fasern (132), werden anschließend mechanisch zu einer kompakten Zusammenstellung von Elementen, deren Raumstruktur sich einer gleichmäßigen Zusammenstellung deren Elemente nähert, durch Teilung auf eine definierte maximale Abmessung mittels einer Schneidmaschine (3) und durch anschließende Zerteilung, Durchmischung und Verflechtung mithilfe einer Kardiermaschine (4) bearbeitet.

2. Das Verfahren zur Herstellung vom Bauschstoff nach dem Anspruch 1, **gekennzeichnet dadurch, dass** man zu den Bauschbüscheln (13) vor deren Bearbeitung Zusatzmaterial in Form von Partikeln und/oder Textilfasern beifügt.

3. Die Bauschanlage (2) zur Herstellung vom Bauschstoff als dem Konstruktionsmaterial, vor allem für Bauwesen, hergestellt im Verfahren beschrieben in den Ansprüchen 1 bis 2, bestehend aus einem Kasten (22) mit einer Eingangsöffnung (221) und einer Ausgangsöffnung (222) für das bearbeitete Material, wo auf der Welle (211) eine Drehtrommel (21) gelagert ist, auf der Oberfläche versehen mit Werkzeug, wo die Drehtrommel (21) eine Außenfläche (210) in Form eines sich in Richtung von der Eingangsöffnung (221) zur Ausgangsöffnung (222) des Kastens (22) erweiternden abgestumpften Kegels und ausgestattet mit einem System von Hammermessern (212) mit Klingen (2122) auf Drehbolzen (2121) gelagert, die im Umfang der Außenfläche (210) gleichmäßig in der definierten geometrischen Form angeordnet sind, aufweist, wobei in Richtung von der Eingangsöffnung (221) zur Ausgangsöffnung (222) des Kastens (22) die Messer (212) eine allmählich sich verkleinernde Formausgestaltung der Spitzen (2123) und eine allmählich sich erhöhende Anzahl und Dichte deren Anordnung aufweisen, der Kasten (22) verfügt über eine Innenfläche (224), gleich wie die Drehtrommel (21), hergestellt in Form eines abgestumpften Kegels mit dem Spiegelbild der Außenfläche (210) der Trommel (21) und auf seiner Oberfläche sind kantige Vorsprünge (223) angeordnet, die in Richtung von der Eingangsöffnung (221) zur Ausgangsöffnung (222) des Kastens (22) eine allmählich sich verkleinernde Formausgestaltung und eine sich allmählich erhöhende Anzahl und Dichte ihrer Anordnung aufweisen, wo die geometrische Form der Anordnung der Vorsprünge (223) ein Spiegelbild der jeweiligen Form der Außenfläche (210) der Trommel (21) darstellt, wobei zwischen den Vorsprüngen (223) und den Messern (212) der Trommel (21) ein Spalt (23) zum Vorschub des bearbeiteten Materials gebildet ist.

4. Die Anlage nach dem Anspruch 3, **gekennzeichnet dadurch, dass** die Drehtrommel (21) fest auf der Tragwelle (211) und dadurch gegen den Kasten (22) in der Horizontalrichtung zwecks der Einstellung der Spaltgröße (23) verschiebbar gelagert ist.

5. Die Anlage nach den Ansprüchen 3 und 4, **gekennzeichnet dadurch, dass** die Messer (212) und entsprechenden Vorsprünge (223) in mehreren Sektionen (213, 214, 214) angeordnet sind, wo jede davon ein System von mindestens zwei Messern (212) mit gleicher Formgestaltung der Spitzen (2123) und mindestens zwei dazu gehörigen Vorsprüngen (223) gleicher Formgestaltung bildet.

6. Die Anlage nach den Ansprüchen 3 bis 5, **gekennzeichnet dadurch, dass** die Außenfläche (210) der Trommel (21) und die dazu gehörige Innenfläche (224) des Kastens (22) in mindestens zwei Sektionen (213, 214) mit unterschiedlicher und von der ersten Sektion (213) sich verkleinernder Formgestaltung der Spitzen (2123) und der dazu gehörigen unterschiedlichen und sich von der ersten Sektion (213) allmählich verkleinernden Ausführung der Vorsprünge (223) geteilt sind.

7. Die Anlage nach einem der Ansprüche 3 bis 6, **gekennzeichnet dadurch, dass** die definierte geometrische Form der Anordnung der Messer (212) und der zugehörigen Vorsprünge (223) ein Umfangkreis ist.

8. Die Anlage nach einem der Ansprüche 3 bis 7, **gekennzeichnet dadurch, dass** das Messer (212) zwischen den Spitzen (2123) mindestens einen Spalt (2124) aufweist.

## Revendications

1. Le procédé de fabrication d'un matériau touffu servant de matériau de construction, notamment pour le secteur du bâtiment, traitant comme matière première (11) des parties usées et/ou résiduelles des produits utilisés dans les moyens de transport, **caractérisé en ce que** la matière première (11) contenant des tissus durcis et des composants combinés textiles et non textiles est tout d'abord découpée en hachis (12) de dimensions maximales définies au moyen d'une machine de découpe (1), ensuite elle est concassée, fractionnée et effilochée en touffes (13) au moyen d'un dispositif de touffage (2) où le tambour rotatif (21) a sa surface extérieure (210) réalisée sous forme tronconique s'élargissant en diamètre dans la direction allant de l'ouverture d'entrée (221) vers l'ouverture de sortie (222) du boîtier (22) et cette surface extérieure (210) étant doté d'un ensemble de marteaux coupeurs (212) avec des lames (2122) montées sur des pivots (2121), les coupeurs (212) étant uniformément disposés sur la circonférence de la surface extérieure (210) sous la forme géométrique définie sachant que dans la direction de l'ouverture d'entrée (221) vers l'ouverture de sortie (222) du boîtier (22) la forme des pointes (2123) diminue progressivement et la fréquence et la densité de leur placement augmentent progressivement, le boîtier (22) a une surface intérieure (224), également comme le tambour rotatif (21), se présentant sous la forme tronconique avec une image en miroir de la surface extérieure (210) du tambour (21) et munie de saillies rectangulaires (223), où la forme géométrique de la disposition des saillies est une image en miroir de la surface extérieure respective (210) du tambour (21), et que ces touffes (13) contenant des particules (131) de la matière première (11) enveloppées d'un amas de fibres effilochées (132) sont ensuite mécaniquement modifiés à un ensemble cohérent d'une structure spatiale se rapprochant de la distribution uniforme de ses éléments, par le fractionnement en une dimension maximale définie au moyen d'une machine à découper (3) et ensuite par le démêlage, mélange et enlacement au moyen d'une machine à carder (4).

2. Le procédé de fabrication d'un matériau touffu selon la revendication 1 **étant caractérisé en ce qu'**un matériau complémentaire de particules et/ou de fibres textiles est ajouté aux touffes (13) avant leur traitement.

3. Le dispositif de touffage (2) pour la fabrication d'un matériau touffu servant de matériau de construction, notamment pour le secteur du bâtiment, fabriqué selon le procédé décrit dans les revendications 1 à 2, comprenant un boîtier (22) avec une ouverture d'entrée (221) et une ouverture de sortie (222) pour le matériau traité dans lequel un tambour rotatif (21) muni des outils est monté sur un arbre (211), où le tambour rotatif (21) a sa surface extérieure (210) réalisée sous forme tronconique s'élargissant en diamètre dans la direction allant de l'ouverture d'entrée (221) vers l'ouverture de sortie (222) du boîtier (22) et dotée d'un ensemble de marteaux coupeurs (212) avec des lames (2122) montées sur des pivots (2121) qui sont disposés uniformément sous la forme d'une formation géométrique définie le long de la circonférence de la surface extérieure (210) sachant que dans la direction de l'ouverture d'entrée (221) vers l'ouverture de sortie (222) du boîtier (22) la forme des pointes (2123) diminue progressivement et la fréquence et la densité de leur placement augmentent progressivement, le boîtier (22) a une surface intérieure (224), également comme le tambour rotatif (21), se présentant sous la forme tronconique avec une image en miroir de la surface extérieure (210) du tambour (21) et munie de saillies rectangulaires (223) qui ont une forme progressivement décroissante dans la direction allant de l'ouverture d'entrée (221) vers l'ouverture de sortie (222) du boîtier (22) et une fréquence et densité progressivement croissante, où la forme géométrique de la disposition des saillies (223) est une image en miroir de la surface extérieure respective (210) du tambour (21), une fente (23) étant prévue entre les saillies (223) et les coupeurs (212) du tambour (21) pour transférer le matériau traité.

4. Le dispositif selon la revendication 3 **caractérisé en ce que** le tambour rotatif (21) est fixé sur l'arbre de support (211) à travers duquel il peut être déplacé horizontalement par rapport au boîtier (22) afin de régler la taille de la fente (23).

5. Le dispositif selon les revendications 3 et 4 **caractérisé en ce que** les coupeurs (212) et les saillies respectives (223) sont disposés en plusieurs sections (213, 214, 215), chacune comprenant un ensemble d'au moins deux coupeurs (212) avec la même forme des pointes (2123) et d'au moins deux saillies correspondant (223) de même forme.

6. Le dispositif selon les revendications 3 à 5 **caractérisé en ce que** la surface extérieure (210) du tambour (21) et la surface intérieure respective (224) du boîtier (22) sont divisées en au moins deux sections (213, 214) avec une forme différente des pointes (2123) qui diminue à partir de la première section (213) et des saillies correspondantes (223) de forme différente en diminution progressive à partir de la première section (213).

7. Le dispositif selon une des revendications 3 à 6 **caractérisé en ce que** la configuration géométrique définie de la disposition des coupeurs (212) et des saillies respectives (223) est un cercle circonférentiel.

8. Le dispositif selon une des revendications 3 à 7 **caractérisé en ce que** le coupeur (212) présente au moins un espace (2124) formé entre les pointes (2123).
